# EUROPEAN PATENT SPECIFICATION

(11) **EP 1 816 920 B1**
(45) Date of publication and mention of the grant of the patent: **03.08.2016**
(21) Application number: 05799162.2
(22) Date of filing: 11.10.2005
(51) Int. Cl.: A23L 33/21

(54) **FIBRE COMPOSITION IN LIQUID FORM**
BALLASTSTOFFZUSAMMENSETZUNG IN FLÜSSIGER FORM
COMPOSITION FIBREUSE SOUS FORME LIQUIDE

(30) Priority: 11.10.2004 FI 20040371 U; 24.03.2005 FI 20050323
(43) Date of publication of application: 15.08.2007
(73) Proprietor: Ravintoraisio Oy, 21200 Raisio (FI)
(72) Inventor: LAAKSO, Simo, FI-20380 TURKU (FI); LEHTINEN, Pekka, FI-02880 VEIKKOLA (FI)
(74) Representative: Berggren Oy Ab
(86) International application number: PCT/FI2005/000433
(87) International publication number: WO 2006/040395

(56) References cited:
- WO-A-00/30457
- WO-A-02/076244
- US-A- 5 104 677

## Description

The invention relates to a method for preparing a liquid fiber composition, and to an edible fibre composition in liquid form.

In the Western diet, there is an obvious need to increase the portion of dietary fiber in the overall diet and, at the same time, to decrease the portion of quickly absorbed carbohydrates. On the market, there are several fiber-rich compositions in the form of drinks. Typically, the fiber content in these is within 0.2 and 3.0 % (Table 1). The amounts of grain-based dietary fiber in the liquid fiber compositions are considerably smaller, clearly less than 1.5 % by weight of the product.

**Table 1. The fiber content of the liquid fibre compositions on the market**

| Brand name | Manufacturer | Fiber content (% by weight) | Source of fiber |
|---|---|---|---|
| Hyvää Päivää fiber drink | Sinebrychoff Oy | 1.0% | Fructooligosaccharide |
| Breakfast with cereal fibers | Chiquita Inc. | 0.7 % | Inulin, oat* and pectin |
| Gooseberry-boysenberry soup + fiber | Valio Oy | 3.0 % | Fructooligosaccharide |
| Yosa drink | Bioferme Oy | 1.5 % | Oatmeal*, modified potato starch, pectin |
| Graindrops, oat drink | BioSophia Inc. | 0.2 % | Oatmeal |
| Oatly oat drink | Skånemejerier | 0.8 % - 1.0 % | Oatmeal |
| Gefilus orange-peach juice + fiber | Valio Oy | 3.0 % | Fructo-oligosaccharide |
| Boost with fiber | Mead Johnson & Company | 3.0 % | Soy fiber |

| | | | |
|---|---|---|---|
| *The product specification does not indicate, which part of the dietary fiber comes from corn | | | |

In present liquid fiber compositions, the dietary fiber is usually added by mixing powdery fiber (e.g., modified maltodexstrin, fructo-oligosaccharide or inulin) with liquid or by dissolving the soluble fiber in advance in a small volume of liquid and mixing the mixture with the rest of the liquid (US2003077368 and JP2001161330). The publications WO 91/17672, WO 00/65930, WO 03/041507 and US 6 020 016, for example, describe products that contain grain-based dietary fiber.

US-patent 6 020 016 discloses fruit juices, into which a grain product and vanilla or almond flavouring have been added to enhance the taste. The insoluble dietary fiber has preferably been removed from the grain product because of the sediment caused by the same in fruit juices. The grain product is also preferably treated with enzymes, such as amylases, to solve the problem of the increasing viscosity in fruit juices. In the prepared products, however, the content of β-glucans is very low, 0.09 % by weight at a maximum, whereby its nutritional value is nonexistent. According to the publication, the fruit juice is traditionally made by mixing the grain product and the other dry matter, a stabilizer, among others, with the fruit juice. The method described in the patent cannot be used to make fruit juices that have a high dietary fiber content.

Publication WO 03/041507 describes a drink, wherein a grain product, stabilizer and liquid are homogenized. The grain product here is a ripened and preferably roasted, ready-to-eat product of the Corn Flakes type, for example, which has been ground before adding to the heated liquid with the stabilizer and any other possible additives. The mixture has been heated and homogenized to provide a product of uniform quality. This method cannot be used to make drinks that have a high dietary fibre content.

Publication WO 00/65930 describes a method for preparing a fiber-rich cereal emulsion by treating bran or wholemeal with hot water, by grinding and homogenizing at a pressure of 80 to 250 bar, in practice, by a single homogenization at a pressure of 150 to 170 bar. The emulsion is preferably further fermented. In the examples, products are prepared, the dietary fiber content of which is relatively high, but these products are not liquid. The text states that such a thick fiber product can be used as an additive in beverages. In that case, the dietary fiber content of the beverage remains low.

Publication WO 91/17672 describes the preparation of a food product from bran and water by heating, cooling and, finally fermenting by means of lactic acid bacteria. The product is depicted as yoghurt-type or gel-like, which can be consumed with a spoon or which can be drunk. Neither can this method be used to prepare liquid products with a high dietary fiber content.

WO 02/076244 discloses a beverage powder which is able to progressively increase the viscosity of liquids, the beverage powder comprising particles of a gelatinised cereal fraction containing β-glucan, the particles having a particle size of less than about 350 µm.

WO 00/30457 discloses an oat-derived non-dairy base prepared by enzymatically digesting a slurry of oats with an enzyme that generates glucose from oat starch.

The purpose of the homogenization in the existing methods is to improve the uniform quality of the mixture and to increase its viscosity by degrading the starch granules to decelerate the phase separation. The pressure required to degrade the starch granules in the homogenization is relatively low, from 140 to 170 bar. An essential feature in the known techniques is that the dietary fiber content of the products is fairly low.

Although it is recognized that an increase in the portion of dietary fiber in foodstuffs is extremely advisable from the point of view of nutrition and national health, in practice, it also involves problems that are so far unresolved. The problems relate to the undesired structure, taste, aroma and appearance of the product caused by the dietary fiber, and especially to the lack of manufacturing techniques, which can be used to ensure a considerable content of dietary fiber in the liquid composition in terms of nutrition. Unlike in low-fiber products, the problem with the manufacturing techniques is the excess viscosity formed by the soluble fiber. These problems are emphasized particularly, when trying to prepare liquid fiber products from grain-based fiber fractions, as the portion of the soluble fiber in them, mostly β-glucan and arabinoxylane, which form the viscosity, is high. In industrial production, the problems caused by the high viscosity include, for example, the deceleration of flow in the pipework, mixers and heat exchangers. At their worst, these can lead to clogging of the equipment and burning and sticking of the composition in connection with the heating. Essential problems also occur in the working characteristics of the product. The product may be non-flowing at low shearing forces, thixotropic, or its viscosity properties may change in storage. Efforts have been made to increase the fiber content without an excess thickening of the product by adding various hydrolytic enzymes, which split the soluble dietary fiber molecules that cause viscosity, making them shorter and, thus, decreasing the viscosity of the product. The same goal is aimed at by adding micro organisms into the product, which produce enzymes that hydrolyze the soluble dietary fiber molecules. One disadvantage of these techniques is that, when the fibers degrade, their useful dietary fiber properties decrease, correspondingly.

As new industrial cereal treating methods can be used to produce cereal fiber fractions, wherein the portion of soluble dietary fiber can be rendered extremely high, the need for a method suitable for preparing high-quality liquid fiber compositions is especially topical. For example, when producing oat fractions industrially, the portion of β-glucan in the fraction can be very high, at the moment up to 20 to 22 % by weight (e.g., OBC XD20); Suomen Viljava or OatWell 22; Swedish Oat Fiber). However, a pivotal problem with the manufacturing technique is the viscosity, which the soluble dietary fiber contained in these high-fiber cereal fractions produces in the aqueous media, and the consequent unsatisfactory slime-like flowing properties of the composition. This limits the amount of the high-fiber cereal fraction that is added to the compositions, which are intended to be liquid and, thus, the fiber content of the liquid. The starch content of the high-fiber cereal fractions is within a range of 5 to 30 % by weight and, thus, the effect of the starch in forming the viscosity in the drinks made of these fractions is minor. Thus, the unresolved problem is to prevent any increase in the slime-like viscosity of the mixture of the high-fiber cereal fractions and the aqueous media in order to increase the amount of the high-fiber cereal fraction that is added into the medium and, thus, the fiber content can also be increased.

When wanting to produce a liquid fiber composition from high-fiber cereal fractions, its content of soluble dietary fiber being 0.8 % by weight or higher, a pivotal problem occurs; in addition to the control of the increase in viscosity, also the other working characteristics of the composition, such as that the composition be pourable, i.e., running, have a homogeneous structure and lacking any sliminess and thixotropic aspects. Instead of a liquid product, with a content of as low as 3 to 4 %, the high-fiber cereal fractions produce a gel or a solid material, when simply mixed with water and fully hydrated. The techniques described previously cannot be used to prepare liquid fiber compositions that have a high grain-based dietary fiber content and, especially, a high content of soluble grain-based dietary fiber.

Accordingly, there is a need for both a composition and a method, wherein a sufficient amount of high-fiber cereal fractions can be incorporated in an aqueous medium so that the final product is liquid and its soluble dietary fiber content is at least 0.8 % by weight. This invention solves the problem described above.

The invention relates to a method for preparing a liquid fiber composition, to an edible fiber composition in liquid form, containing insoluble and soluble grain-based dietary fiber and an aqueous medium, to the use of the fiber composition in the manufacture of foodstuffs, to a foodstuff, and to a product that is used as a foodstuff or the raw material of a foodstuff, as defined in the independent claims. The dependent claims present some preferable embodiments of the invention.

"Edible" means that the composition can be taken orally. Thus, the composition meets the requirements made on foodstuffs.

The dietary fiber contains a component that does not dissolve in the medium, and it forms a dispersion with the aqueous medium. The composition is liquid at a temperature of 4°C, and the total content of its grain-based dietary fiber is at least 1.6 % by weight and the content of the soluble grain-based dietary fiber is at least 0.8 % by weight. The composition preferably contains 1.6 - 4.0 % by weight, preferably 1.6 - 3.0 % by weight, even more preferably 1.7 - 3.0 % by weight, more preferably 1.8 - 3.0 % by weight of grain-based dietary fiber. The composition preferably contains at least 0.9 % by weight, more preferably at least 1.0 % by weight, even more preferably at least 1.1 % by weight, most preferably at least 1.2 % by weight of soluble grain-based dietary fiber. In particular, the soluble grain-based dietary fiber can be β-glucan and/or arabinoxylane, preferably β-glucan.

The term "dietary fiber" refers to both the soluble and the insoluble portion of the dietary fiber. It consists of polysaccharides, which the human digestive enzymes cannot hydrolyze. The "grain-based dietary fiber" refers to a dietary fiber, which can be obtained from corn and, thus, the definition also includes components obtained from sources other than corn. As an example, the β-glucan produced by yeast could be mentioned. The grain-based dietary fiber can thus consist of, for example, the unsoluble dietary fiber of the wheat fraction and the β-glucan produced by yeast. The corns include the traditional grains, such as wheat, barley, oat, rye, rice, maize, millets and buckwheat, in particular.

The total amount of dietary fiber can be determined by the method of the Association of Official Analytical Chemists, Inc., Virginia, USA (A.O.A.C.) for defining the fiber (Official Methods of Analysis of the A.O.A.C., 15^{th} ed., 1990). If the composition contains other than grain-based dietary fibers, such as pectin or inulin, they must be defined separately when using the method that is referred to and subtracted from the total amount in order to find out the amount of grain-based fiber.

The "soluble grain-based dietary fiber" herein refers, in particular, to the β-glucan and/or arabinoxylane, of which the former can be determined, for example, by the method 32-23 (AACC International Methods of Analysis, 10^{th} ed., March 2000) of the American Association of Cereal Chemists (AACC), and the latter, for example, as described in publication Food Chemistry 7(2), 139 - 145, 1981 (Douglas, S., A rapid method for the determination of pentosans in wheat flour).

The "aqueous medium" herein refers to any substance that is drinkable and at least partially contains water. Examples include water, juice (such as fruit, berry, vegetable or root juices), a milk product, sour milk product, grain-based drink (such as oat or rice drinks), alcoholic drink (such as beer) and/or soy drink. Accordingly, the aqueous medium can also contain solids that are mixed therewith.

The "liquid" composition is one that can be pumped, poured and/or drunk. The composition according to the invention is thus liquid up to a temperature of 4°C.

The fiber composition contains starch, the amount of starch being 3 % by weight at a most, preferably 2.5 % by weight at the most, more preferably 2 % by weight at the most, and most preferably 1.5 % by weight at the most. In practice, this means that the starch hardly affects the viscosity of the composition.

According to a preferred embodiment of the invention, the composition contains at least 1.7 % by weight, preferably 1.7 - 3.0 % by weight of grain-based dietary fiber so that the amount of β-glucan is at least 1 % by weight and that of starch 2 % by weight at the most.

According to the invention, relatively stable dispersions can be obtained, which keep, for example, at least one day without the phases separating.

It is also preferable that the composition further contains one or more components that are selected from a group of sugars, berry juices, fruit juices, vegetable juices and root juices, and/or other ingredients to change the taste, acidity and/or colour of the composition. If the health-promoting effects of the composition are to be enhanced or complemented, one or more additional components can be added thereto, such as fatty acids and/or their esters, vegetable sterols and/or their esters and/or probiotic micro organisms, to change the nutritional formula.

The aqueous medium in the composition according to the invention is preferably water, juice, fruit juice, a milk product, sour milk product, grain-based drink, alcoholic drink, soy drink or a mixture of two or more of these.

The composition is preferably one that contains no fiber-degrading substances, such as a fiber-degrading enzyme, or a source of such a substance, such as a micro organism that produces the fiber-degrading enzyme. The composition is preferably also one that contains no thickening agents that originate in others than the fiber material and the liquid medium used.

According to the invention, a composition can be provided, which is homogeneous and which is not slime-like or thixotropic.

One object of the invention is a method for preparing a liquid fiber composition containing grain-based dietary fiber and an aqueous medium. The dietary fiber contains a component that does not dissolve in the medium and a component that dissolves in the medium. The total content of the dietary fiber is at least 1.6 % by weight and that of the soluble fiber at least 0.8 % by weight. The method includes the following steps:
a) a fiber material is selected, the content of its soluble grain-based dietary fiber being at least 8 % by weight of the dry matter,
b) the fiber material is mixed with the aqueous medium to form a mixture with a fiber material content of over 1 % by weight,
c) a homogenization process is carried out to provide a liquid fiber composition, which at a temperature of 4 °C is a liquid dispersion.

It is preferable that the viscosity, as measured in a shear rate range of 20 to 100s⁻¹, is decreased because of the homogenization process by at least 40% of the viscosity of a corresponding non-homogenized, fully hydrated mixture in the same measuring conditions.

The term "fiber material" refers to a material that contains grain-based dietary fiber. The fiber material can be, for example, any grain fraction rich in dietary fiber.

In the method according to the invention, it is preferable that the fiber material is brought into contact with the aqueous medium so that, before a subsequent homogenization, the mixture has no time to form a considerable viscosity. The formation of viscosity is prevented by homogenizing the mixture in pressurized conditions after the mixing. Alternatively, hydration may be allowed to take place in the mixture and the increasing viscosity can be reduced by homogenization. It is essential for both methods that the homogenization conditions are selected so that the property of the soluble fiber to form slimy viscosity is cancelled out. According to the invention and compared with the homogenization methods used in known methods, this requires the exertion of a considerably higher total energy on the mixture that is to be homogenized. A sufficiently high homogenization energy is provided by means of higher pressures than the homogenization pressures previously used, typically from 200 to 600 bar, and/or by repeating the homogenization in the said pressure range several times or by recycling the mixture through a homogenizer, until the viscosity of the mixture is essentially reduced, being at low shear rate values (20 to 100s⁻¹) less than 60 % (preferably less than 50 %, more preferably less than 40 %, most preferably less than 30 %) of the viscosity, which forms in a corresponding, fully hydrated mixture without homogenization. By doing so, a liquid fiber composition is obtained at a temperature of 4 °C, the total content of its grain-based dietary fiber being 1.6 % by weight or higher, and the content of its soluble grain-based dietary fiber being 0.8 % by weight or higher.

In this invention, selecting the range of 20 to 100 s⁻¹ as the shear rate range of the viscosity provides a basis for the examination, as the viscosity in that range in practice affects the state of the composition and, thus, its usability the most. Accordingly, it is essential that the homogenization process is effective enough in order to provide a desired reduction in the viscosity value and, thus, the liquid composition as an end product. It is preferable that the decrease in viscosity is at least 50 %, more preferably at least 60 % and most preferably at least 70 % of the viscosity value of a corresponding non-homogenized, fully hydrated mixture, when calculated in the same measuring conditions. The fully hydrated mixture refers to a mixture, which is treated in the prevailing conditions (the temperature, manner of blending, etc.) so that its insoluble and dissolved ingredients will no longer increase the viscosity, when the aqueous medium is added (in other words, that the mixture is not water limited) or when the treatment is continued. This can be accomplished, for example, by the method described in Method 1 of Example 1. In other words, if the mixture is fully hydrated, its viscosity decreases, when the medium is added. If no medium is added but the same treatment, e.g., mixing is continued, the viscosity remains unchanged.

The fiber material used in the method contains at least 8 % by weight, preferably at least 10 % by weight, more preferably at least 12 % by weight and most preferably at least 15 % by weight of soluble grain-based dietary fiber, as calculated from the dry matter. It is preferable that the starch content of the fiber material be 40 % by weight at the most, more preferably 35 % by weight at the most, even more preferably 30 % by weight at the most, and most preferably 25 % by weight at the most as calculated from the dry matter. It is especially preferable that the starch content of the fiber material is from 5 to 30 % by weight.

The method according to the invention comprises several embodiments, which can be used to extensively adjust the final fiber content of the liquid fiber composition and its liquid properties, such as viscosity. By adjusting the method of homogenization described in the invention and the dry content of the non-hydrated mixture that is used in the homogenization, liquid compositions with differing viscosities can be produced. A preferred embodiment is to repeat the homogenization or to recycle the non-hydrated mixture in the described pressure range to provide the desired effect. Fiber-containing fraction can also be re-added to the homogenized mixture and renew the homogenization; or the circulation of homogenization and fiber addition can be continued until the desired final fiber content and flow property of the liquid are achieved. The different embodiments are characterized in that the fiber content and the final viscosity of the liquid composition can be adjusted and, thus, gradually increased, when needed, as instead of the starch or other thickening agents, for example, the originally added or a corresponding fiber composition can be used to adjust the viscosity and/or increase the fiber content.

The homogenization at the pressure values used and by the embodiments described reduce the viscosity, remove the stretchability and the thixotropic aspect from the composition and ensure a homogeneous distribution of the insoluble phase in the aqueous medium.

The method according to the invention does not place restrictions to the aqueous media used in it and, therefore, the suitable media include different milk products, alcoholic aqueous solutions, aqueous extracts prepared from fruit, vegetables and roots, such as juices, aqueous minor flows produced by the food industry and other liquid media, which are suitable for the currently known homogenization apparatuses.

According to the present invention, oat fibers with a content of β-glucan of 15 % or higher can be exploited, in particular. The fiber material used in the invention can originate in the dry or wet fractionation of the cereal and, preferably, also the extruded fractions thereof or fractions, for which a degreasing extraction is carried out to increase their fiber content. According to its principle, the invention is not limited to oat-based raw materials but, as such, is also suited to high-fiber fractions that are prepared from other grains. However, the method is also suited to grain fractions, wherein the content of soluble dietary fiber, such as β-glucan, is lower, e.g., at least 8 % by weight, preferably at least 10 % by weight, more preferably at least 12 % by weight, and most preferably at least 15 % by weight of the dry matter in the fiber material.

The method according to the invention makes it possible to simply use a fiber-rich fraction to prepare the liquid composition without adding starch or other thickening agents. However, in some compositions or foodstuffs prepared from them, it may be advantageous to add a stabilizer, such as pectin, to improve the stability of the dispersion. Thus, the method can be used to prepare liquid compositions, wherein the portion of grain-based soluble fiber is high, 0.8 % by weight or higher. As the method can use a cereal fiber material, in which the content of starch is very low, typically, less than 30 % of the dry matter and thus insignificant for the formation of the structure, the portion of the insoluble fiber in the dry matter of the liquid fiber composition is also high, and the amount of dietary fiber can be increased to 30 % of the dry matter.

The liquid fiber composition according to the invention can be supplemented and modified by various means without essentially reducing its fiber content. The composition can be coloured, sweetened, and it can work as a flowing phase in foodstuffs that require a flowing aqueous phase. Similarly to other grain fractions, the liquid fiber composition is naturally also suited to fermentation or it can be supplemented with micro organisms or their parts. The liquid fiber composition also has a special capability of emulsifying fat, and it can thus be used as a fat substitute in various diet products.

After the homogenization process, it is preferable to heat the composition to at least a temperature of 70 °C to prevent the growth of microbes, for example, by means of pasteurization or the ultra heat treatment (UHT). After this, the composition is cooled to a temperature of 4 to 30 °C for storage. The composition can further be homogenized in aseptic conditions in a traditional manner before storage. The components that are possibly added to the composition can be added at any stage during the manufacturing method, of course, taking into consideration the durability of the component in question in the homogenization process, for example.

The homogenization process can thus be carried out in various ways. It is essential that the process is effective enough to reduce the viscosity. One preferred implementation is that the homogenization process is carried out as a single homogenization at a pressure of at least 260 bar. The pressure is preferably at least 300 bar, more preferably within a range of 300 to 800 bar, and most preferably within a range of 300 to 600 bar. In that case, of course, the entire grain-based dietary fiber of the composition is added once so that the content of the fiber material in the aqueous medium is over 1 % by weight, preferably over 3 % by weight and most preferably over 3.5 % by weight. Example 4 describes such a method.

Another preferred implementation of the homogenization process is that at least two successive homogenizations are carried out. The number of homogenizations can be 2 to 30, preferably 2 to 10, more preferable 3 to 10, and the pressure in the process is at least 150 bar, preferably at least 200 bar, more preferably at least 250 bar, and most preferably at least 300 bar. It is preferable to carry out at least two homogenizations at a pressure of at least 300 bar or at least three homogenizations at a pressure of at least 150 bar. The content of fiber material in the aqueous medium in this implementation is preferably over 3 % by weight. Example 2 describes such a method.

A third preferred implementation of the homogenization process is that the mixture that is treated in the homogenizer is recycled through the homogenizer in a continuous process by bringing the mixture that is treated in the homogenizer through a mixing intermediate tank to the next homogenization stage, until the liquid volume of the mixture passing through the homogenizer is 2 to 30 times the volume of the mixture that was fed in, preferably 3 to 30 times. In this homogenization process, the pressure is at least 150 bar, preferably at least 200 bar, more preferably at least 250 bar and most preferably at least 300 bar. It is also preferable to carry out the homogenization process so that the recycling volume is reduced to 2 to 10-fold, whereby the homogenization is carried out at a pressure of at least 200 bar, preferably at least 250 bar and more preferably at least 300 bar. In this implementation, all parts of the mixture do not necessarily pass through the homogenizer equally many times. The content of the fiber material in the aqueous medium in this implementation is preferably over 3 % by weight. Example 3 describes this method in more detail.

A fourth preferred implementation comprises the addition of a grain-based material, which has a content of soluble grain-based dietary fiber of at least 8 % by weight of the dry matter, to a mixture that has gone through one or more homogenizations, and re-homogenizing the mixture. The times of addition and the subsequent homogenizations can be varied to give the composition a desired structure and consistency. Such a homogenization process can be implemented in accordance with the homogenization system of either the second or the third implementation, whereby, however, the content of the fiber material in the aqueous medium can be relatively low, over 1 % by weight, as more dry fiber material is added during the homogenization process. In practice, the dietary fiber is added in batches after each homogenization, whereby the viscosity is reduced in the next homogenization. In this way, it is ensured that, at no stage, will there be problems with an excessively high viscosity. In such an implementation, the fiber material is preferably added from 1 to 30 times and the homogenization is carried out from 2 to 50 times in all. The pressure at the homogenization stage is at least 150 bar. However, at least three homogenizations are preferably carried out at a pressure of at least 150 bar. It is also preferable to carry out the homogenization process so that it includes at least two homogenizations at a pressure of at least 200 bar, more preferably at least 250 bar, and most preferably at least 300 bar. Such an implementation is described in Example 8.

At stage a) of the manufacturing method, an oat fraction is preferably used as the fiber material, containing at least 8 % by weight, preferably at least 10 % by weight, more preferably at least 12 % by weight, and most preferably at least 15 % by weight of soluble grain-based dietary fiber in the dry matter. It is preferable that the fiber material is an oat fraction with a starch content of 40 % by weight at the most, more preferably 35 % by weight at the most, even more preferably 30 % by weight at the most, and most preferably 25 % by weight of dry matter at the most.

A third object of the invention is the use of the fiber composition in the manufacture of foodstuffs. The foodstuff may contain any nutritional composition and the liquid fiber composition in question. This foodstuff may be a semi-solid or solid product that is not suited to drinking, i.e., a non-flowing product. The nutritional composition refers to any edible product or part of a product. Adding the edible liquid fiber composition to the product gives the foodstuff nutritional added value. In particular, the edible liquid fiber composition can be used as a fat substitute and, thus, its use is especially advantageous in foodstuffs with a relatively low fat content, such as 40 % by weight at the most, preferably 30 % by weight at the most, more preferably 20 % by weight of fat at the most.

The liquid fiber composition may also be dried, for example, by freeze-drying, after which it can be used in various edible products or, for example, mixed again to form a liquid composition. The water content of the dried fiber composition can be 15 % by weight at the most, preferably 10 % by weight at the most.

The invention is described by means of the following drawings and embodiment examples.
Fig. 1. The viscosities of the fiber compositions prepared according to Example 1 in a shear rate range of 24 to 1233 s⁻¹.
Fig. 2. The effect of homogenization power on the viscosity of a liquid fiber composition containing 5 % by weight of oat fiber. The mixture of oat fiber and water was homogenized at a pressure of 250 bar by recycling the mixture through a homogenizer according to Example 3.
Fig. 3. The preparation of a liquid fiber composition according to Example 8 in a two-stage homogenization process. At the first stage, 4.7 % by weight of oat fiber is added to an aqueous medium and the mixture is homogenized so that its viscosity is essentially reduced. At the second stage, 1.2 % by weight of oat fiber is further added to the mixture and the mixture is re-homogenized.

### Example 1

Oat fiber with a β-glucan content of 20 % by weight and a starch content of 13 % by weight (Suomen Viljava, OBC XD20) were mixed with water in a ratio of 5.6 % by weight of oat fiber and 94.4 % by weight of water, whereby the β-glucan content of the mixture was 1.1 % by weight, the dietary fiber content 2.1 % by weight, and the starch content 0.8 % by weight.

This mixture was treated by four different methods. Regarding the treatments described below, Methods 1 to 3 reflect the known mixing and homogenization conditions for various types of grain-based compositions and Method 4 describes the treatment according to the invention.
Method 1): The mixture was heated to a temperature of 90 °C and kept at this temperature for 30 min. The mixture was mixed with a blade mixer but not homogenized.
Method 2): The mixture was heated to a temperature of 90 °C and homogenized once in a high-pressure homogenizer (Rannie MINI-LAB, type 8.30H) at a pressure of 250 bar.
Method 3): The mixture was heated to a temperature of 90 °C and homogenized twice in the high-pressure homogenizer (Rannie MINI-LAB, type 8.30H) so that the pressure in the first homogenization was 160 bar and in the second homogenization 120 bar.
Method 4): The mixture was homogenized in the high-pressure homogenizer at room temperature by recycling the mixture through the high-pressure homogenizer (Rannie MINI-LAB, type 8.30H) at a pressure of 200 bar. The recycling was carried out so that the inlet and the outlet of the homogenizer were connected to the same intermediate tank, where the whole batch of the mixture to be processed was mixed with a blade mixer. The recycling was continued until the volume of the amount of material passing through the homogenizer was fourfold with respect to the original volume of the mixture. After this, the whole mixture was homogenized once at a pressure of 200 bar without recycling.

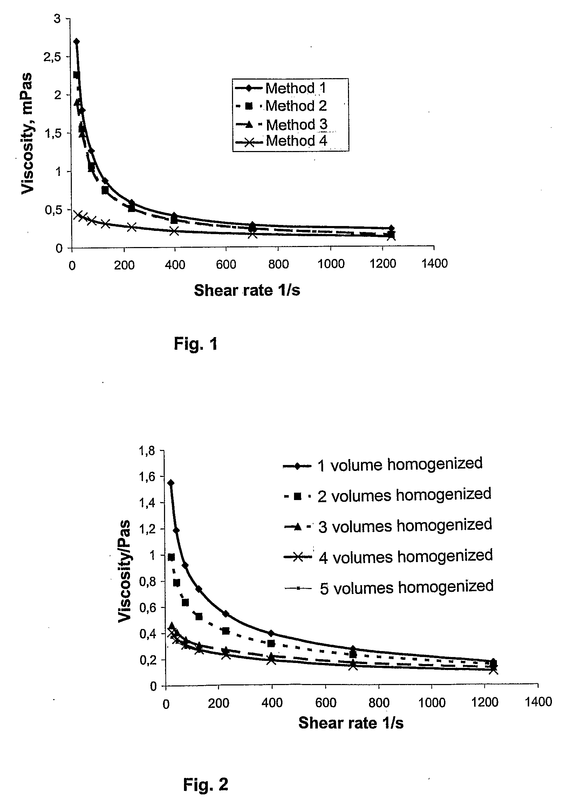

Finally, the mixtures obtained using Methods 1 to 4 were heated to a temperature of 90 °C, after which they were cooled to room temperature. The structure of the fiber compositions thus obtained was assessed by sensory perception, using the following descriptive terms: non-flowing thick mushy, non-flowing mushy and liquid flowing. Furthermore, the viscosity of the fiber compositions was measured by the Visco 88 (Bohlin) viscosimeter. It was observed that the fiber compositions made by Methods 1 to 3 were mushy and had no flowing properties. Instead, the fiber composition provided by Method 4 was liquid flowing and its viscosity was clearly lower than that of the other products (Table 2 and Fig.1).

**Table 2. The structure of the fiber compositions prepared according to Example 1, when assessed by sensory perception, and the viscosities at a shear rate of 50 s⁻¹ when measured at a temperature of 15 °C.**

| | Method 1) | Method 2) | Method 3) | Method 4) |
|---|---|---|---|---|
| Structure | Non-flowing thick mushy | Non-flowing mushy | Non-flowing mushy | Liquid flowing |
| Viscosity (mPas) | 1350 | 1194 | 1160 | 367 |

### Example 2

Oat fiber with a β-glucan content of 22 % by weight (Swedish Oat Fiber, OatWell 22) was mixed with water in a ratio of 4 % by weight of oat fiber and 96 % by weight of water, whereby the β-glucan content of the mixture was 0.9 % by weight and the content of dietary fiber was 1.8 % by weight.

The mixture was homogenized in a high-pressure homogenizer (Rannie MINI-LAB, type 8.30H) at a pressure of 300 bar at a temperature of 20 °C. This mixture was homogenized a second time at a pressure of 30 0 bar, whereafter the viscosity was measured. After this, a third homogenization was carried out, still using a pressure of 300 bar and the viscosity value of this was also measured.

For the sake of comparison, a corresponding mixture was treated by heating it to 90 °C, mixing normally, and kept at this temperature for 20 minutes, i.e., in a corresponding way as in Method 1 of Example 1. In this way, for example, a mixture is obtained, which is fully hydrated. This mixture was not homogenized. As another comparison, the entire mixture was homogenized once in the high-pressure homogenizer (Rannie MINI-LAB, type 8.30H) at a pressure of 250 bar.

The fiber compositions obtained in this way were tempered to a temperature of 25 °C and their viscosities were measured by the Visco 88 (Bohlin) viscosimeter. It was observed that homogenization in the conditions according to the invention made the fiber composition less viscous and, thus, more flowing (Table 3).

The results indicate that, at shear rates of 24, 43 and 77 s⁻¹, the decrease in the viscosity value of the compositions according to the invention is at least 40 % come pared with the fully hydrated non-homogenized, corresponding product.

**Table 3. The effect of the homogenization and the homogenization power on the viscosity of a fiber composition containing 4 % by weight of oat fiber, and its percentage reduction compared with a corresponding, non-homogenized, fully hydrated mixture. The mixture of oat fiber and water was homogenized 2 and 3 times at a pressure of 300 bar and, in comparison, once at a pressure of 250 bar. As a reference, the table also shows the viscosity values of the non-homogenized, fully hydrated mixture.**

| Shear rate (s⁻¹) | 2x300 bar (mPas) | Reduction (%) | 3x300 bar (mPas) | Reduction (%) | 250 bar (mPas) | Reduction (%) | Heated for 20 min at 90 °C (mPas) |
|---|---|---|---|---|---|---|---|
| 24 | 1223 | 61,7 | 805 | 74,8 | 2097 | 34,3 | 3194 |
| 43 | 1024 | 51,9 | 714 | 66,5 | 1527 | 28,3 | 2130 |
| 77 | 768 | 46,4 | 617 | 56,9 | 1086 | 24,3 | 1434 |
| 129 | 593 | 41,5 | 540 | 46,7 | 789 | 22,1 | 1013 |
| 229 | 470 | 38,1 | 435 | 42,7 | 555 | 26,9 | 759 |
| 397 | 382 | 30,7 | 315 | 42,8 | 402 | 27,0 | 551 |
| 702 | 293 | 20,6 | 232 | 37,1 | 294 | 20,3 | 369 |
| 1 233 | 210 | 12,5 | 145 | 39,6 | 225 | 6,2 | 240 |

### Example 3

Oat fiber with a β-glucan content of 20 % by weight and a starch content of 13 % by weight (Suomen Viljava OBC XD20) was mixed with water in a ratio of 5 % by weight of oat fiber and 95 % by weight of water, whereby the β-glucan content of the mixture was 1.0 % by weight, the content of dietary fiber 1.8 % by weight and the starch content 0.7 % by weight.

The mixture was heated to a temperature of 60 °C, whereafter it was homogenized at 60 °C, by recycling the mixture through a high-pressure homogenizer (Rannie MINI-LAB, type 8.30H) at a pressure of 250 bar so that the inlet and the outlet of the homogenizer were connected to the same intermediate tank.

After the mixture had circulated through the homogenizer so that the volume passing through the homogenizer corresponded to the entire batch of mixture to be homogenized, a sample was taken from the outlet of the homogenizer for the measurement of the viscosity. After this, the recycling of the mixture through the homogenizer was continued and new samples were taken from the mixture, until a volume had passed through the homogenizer, which was 2, 3, 4 and 5 times the entire batch of mixture to be treated.

It was observed that, when homogenized longer than necessary to achieve homogeneity (Table 4, Fig. 2), the viscosity of the mixture at a temperature of 20 °C dropped rapidly.

**Table 4. The effect of the homogenization power on the viscosity of a liquid fiber composition containing 5 % of oat fiber. The mixture of oat fiber and water was homogenized at a pressure of 250 bar by recycling the mixture through a homogenizer according to Example 3.**

| Homogenization power | 1 volume* | 2 volumes* | 3 volumes* | 4 volumes* | 5 volumes* |
|---|---|---|---|---|---|
| Viscosity (mPas) | 1047 | 694 | 377 | 324 | 306 |

| | | | | | |
|---|---|---|---|---|---|
| * The mixture was recycled through the homogenizer so that the volume of the substance passing through the homogenizer was 1, 2, 3, 4 and 5 times the entire batch of mixture to be treated. | | | | | |

### Example 4

Oat fiber with a β-glucan content of 15 % by weight and a starch content of 25 % by weight (Suomen Viljava OBCN-15) were mixed with water in amounts of 1 % by weight (the reference test) and 7 % by weight, whereby the β-glucan contents of the mixture were 0.2% by weight and 1.1 % by weight, the dietary fiber contents were 0.3 % by weight and 2.2 % by weight, and the starch contents 0.2 % by weight and 1.8 % by weight. This mixture was homogenized at room temperature in the high-pressure homogenizer (Rannie MINI-LAB, type 8.30H) so that the homogenization pressure was 400 bar. After the homogenization, the mixture was heated to a temperature of 70 °C, whereafter it was cooled to a temperature of 4 °C. The mixture was kept at the temperature of 4 °C for 1 day (Table 5). In this way, a liquid fiber composition was provided, wherein the particles originating in oat remained dispersed in liquid, not depositing on the bottom of the liquid. The manner of production makes it possible for the fiber composition, to which 7 % by weight of oat fiber had been added, to stay liquid and flowing.

**Table 5. The effect of the oat fiber content on the stability of the structure of the fiber composition prepared by homogenization**

| Amount of oat fiber | Dietary fiber content of the fiber composition | β-glucan content | Structure of the fiber composition after 1 day of storage |
|---|---|---|---|
| 1 % | 0.3 % | 0.2% | The layers of water and fiber separated |
| 7% | 2.2% | 1.1 % | A homogeneous structure |

### Example 5.

### Fiber-rich orange juice

A liquid fiber composition was prepared by mixing oat fiber (Swedish Oat Fiber, OatWell 22, having a content of glucan of 22 % by weight) with orange juice (Appelsiinimehu, Valio) in a mixing ratio of 4.8 % by weight of oat fiber and 95.2 % by weight of orange juice. In this mixture, the contents of the grain-based ingredients were: β-glucan 1.1 % by weight and the content of dietary fiber 2.1 % by weight. The mixture was homogenized twice in the high-pressure homogenizer (Rannie MINI-LAB, type 8.30H) at room temperature so that the homogenization pressure was 300 bar. After the homogenization, the mixture was heated to a temperature of 70 °C, after which it was cooled to a temperature of 4 °C. This fiber composition was kept at 4 °C for 24 hours without mixing. After the storage, the structure was assessed by sensory perception. It was observed that the structure of the liquid fiber composition remained homogeneous.

### Example 6

### Oil-bearing fiber composition

Oat fiber (Suomen Viljava, OBC XD20) with a β-glucan content of 20 % by weight was mixed with cold water so that the dry content of the mixture was 4.7 % by weight, whereby the β-glucan content of the mixture was 0.9 % by weight, the dietary fiber content 1.7 % by weight and the starch content 0.6 % by weight.

The mixture was homogenized in the high-pressure homogenizer (Rannie MINI-LAB, type 8.30H) at a pressure of 150 bar. Three successive homogenizations were carried out, after which the mixture was heated to a temperature of 85 °C. 20 % by weight of linseed oil was added to the heated mixture and the mixture was homogenized once in the high-pressure homogenizer at a pressure of 400 bar. The mixture was cooled and kept at 4 °C for 5 days. After the storage, the structure of the thus obtained liquid fiber composition and a possible separation of oil and the aqueous phase into separate layers were assessed by sensory perception. It was observed that the structure of the composition after the storage was homogeneous, so that the oat fiber had not deposited on the bottom of the preparation and the oil had not separated on the surface. The addition of oil showed no observable effect on the flowability of the preparation.

### Example 7

### Fiber-rich sour milk

Oat fiber (Suomen Viljava OBCN-15) was mixed with sour milk (Gefilus 1 %, Valio Oy) in a ratio of 5g of oat fiber and 95 g of sour milk, whereby the β-glucan content of the mixture was 1.0 % by weight, the dietary fiber content 1.9 % by weight and the starch content 0.7 % by weight. The mixture was homogenized three times in the high-pressure homogenizer (Rannie MINI-LAB, type 8.30H) at a pressure of 400 bar. After the homogenization, the mixture was heated to a temperature of 85 °C, where it was kept for 5min. The mixture was cooled and kept at 4 °C for 5 days. After the storage, the structure of the thus obtained liquid fiber composition was assessed by sensory perception. It was observed that the state of the composition was liquid flowing and that the structure of the product after storage was homogeneous.

### Example 8

Oat fiber (Suomen Viljava, OBC XD20) was mixed with cold water so that the dry content of the mixture was 4.7 % by weight, whereby the β-glucan content of the mixture was 0.9 % by weight, the dietary fiber content 1.7 % by weight and the starch content 0.6 % by weight. The mixture was homogenized in the high-pressure homogenizer (Rannie MINI-LAB, type 8.30H) at a pressure of 150 bar. The homogenization was carried out four times one after the other. The viscosity of the mixture was measured at a temperature of 25 °C as a function of the shear rate by the Visco 88 (Bohlin) viscosimeter and oat fiber (Suomen Viljava, OBC XD20) was added thereto in an amount of 1.2 % by weight of the weight of the mixture. This mixture was re-homogenized in the high-pressure homogenizer (Rannie MINI-LAB, type 8.30H) at a pressure of 150 bar. The viscosity of the mixture was measured at a temperature of 25 °C, as a function of the shear rate by the Visco 88 (Bohlin) viscosimeter. The β-glucan content of the final fiber composition was 1.2 % by weight; the dietary fiber content was 2.1 % by weight and the starch content 0.8 % by weight. Both fiber compositions were in a liquid flowing state.

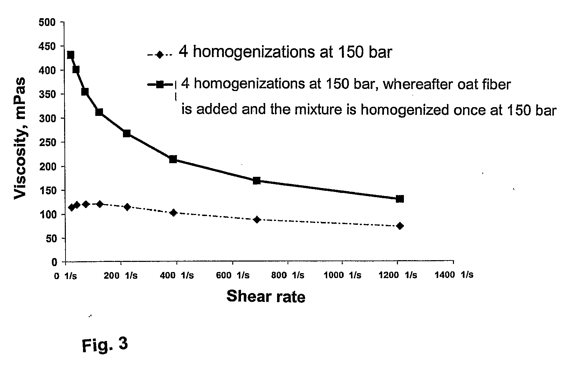

It was observed that the latter addition of fiber can be used to affect the viscous and flowing properties of the liquid fiber composition (Fig. 3). This makes it possible to adjust the structure and the fiber content of the liquid fiber composition to a desired value in a wide range of fiber contents.

### Example 9

### Probiotic-bearing liquid fiber composition

Method 4 of Example 1 was used to prepare a fiber composition. Freeze-dried bacterium powder (Bifidobacterium longum BL2C) was added thereto so that the content of BL2C in the product was from 10⁷ to 10⁸ pmy/ml. The product was packed in 1-liter packages and kept in a cool place (4 to 6 °C). Furthermore, a corresponding preparation was kept in the same conditions, not having any bacterium powder added thereto.

The content of bacteria and the pH of the preparations were analyzed, and sensory assessments were carried out on a weekly basis for 3 weeks. The viscosity was measured at the end of the storage time. The bacteria content was determined by a commercial MRS agar, to which 0.5 % by weight of cystein had been added. The pH was measured by the PHM220 LAB pH meter (Radiometer) and the viscosity was measured by the Visco 88 (Bohlin) viscosimeter both at 4 °C and at room temperature.

The content of bifidobacteria was reduced by about 1log during the storage time of the liquid fiber composition, remaining on the desired level of >10⁶ pmy/ml. No significant changes took place in the pH and the viscosity during storage (Tables 6 and 7). Thus, the liquid fiber composition is also well-suited to the product base of probiotic preparations, and the addition of probiotics does not weaken the properties of the composition that can be sensed. In addition, it was observed that the composition was liquid both at 4 °C and at room temperature.

**Table 6. The contents of bacteria, the pH and the sensory quality in a liquid fiber composition enriched with B. longum 2C**

| Time (a week) | Content (pmy/ml) | pH | Quality to be sensed |
|---|---|---|---|
| 0 | 9x10⁷ | 6,8 | good |
| 1 | 2x10⁷ | 6,4 | good |
| 2 | 3x10⁷ | 6,4 | good |
| 3 | 2x10⁶ | 6,2 | good |

**Table 7. The effect of the bacterium enrichment and the temperature on the viscosity of the liquid fiber composition**

| | Viscosity (mPas) | | |
|---|---|---|---|
| Shear rate s⁻¹) | No cells, 4 °C | No cells, room temperature | B.longum 2C - enriched, room temperature |
| 24 | 482 | 273 | 274 |
| 43 | 433 | 247 | 237 |
| 77 | 387 | 223 | 210 |

## Claims

1. A method for preparing a liquid fiber composition containing grain-based dietary fiber and an aqueous medium, the dietary fiber containing a component not soluble in the medium and a component soluble in the medium, whereby the component not soluble in the medium forms a dispersion with the medium, **characterized in that** the method comprises the following steps:
a) a fiber material is selected, the content of its soluble grain-based dietary fiber being at least 8 % by weight of the dry matter,
b) the fiber material is mixed with the aqueous medium to form a mixture, wherein the content of fiber material is over 1 % by weight, and
c) a homogenization process is carried out to provide a liquid fiber composition, the total content of its grain-based dietary fiber being at least 1.6 % by weight, and the content of the grain-based dietary fiber that is soluble in the medium is at least 0.8 % by weight, the composition being a liquid dispersion at a temperature of 4°C,
wherein the homogenization process of step c) comprises
i) a single homogenization at a pressure of at least 260 bar, preferably at least 300 bar, more preferably from 300 to 800 bar, and most preferably from 300 to 600 bar,
ii) at least two successive homogenizations, preferably 2 to 30 homogenizations, more preferably 2 to 10 homogenizations, and most preferably 3 to 10 homogenizations at a pressure of at least 150 bar, preferably at least 200 bar, more preferably at least 250 bar, and most preferably at least 300 bar,
iii) a continuous recycling through a homogenizer via an intermediate tank, which is to be mixed, so that the volume of the mixture passing through the homogenizer is 2 to 30-fold, preferably 3 to 30-fold with respect to the volume of the mixture fed in, the homogenization pressure being at least 150 bar, preferably at least 200 bar, more preferably at least 250 bar, and most preferably at least 300 bar, or
iv) the addition of a fiber material, the content of its soluble grain-based dietary fiber being at least 8 % by weight of the dry matter, in one or more batches to a mixture that has gone through one or more homogenizations, and it is continued by a subsequent homogenization, the homogenization pressure being at least 150 bar, preferably at least 200 bar, more preferably at least 250 bar.

2. A method according to Claim 1, **characterized in that** in the homogenization process of step c), the viscosity of the mixture at a shear rate range of 20 to 100 s⁻¹ is reduced by at least 40 %, preferably by at least 50 %, more preferably by at least 60 %, and most preferably by at least 70 % of the viscosity of a corresponding non-homogenized, fully hydrated dispersion.

3. A method according to Claim 1 or 2, **characterized in that** the dispersion provided in step c) is heated to a temperature of at least 70 °C, whereafter it is cooled to a temperature of 4 to 30 °C.

4. A method according to Claim 1, **characterized in that** in step c) iv) the number of batches is 1 to 30 and the number of homogenizations 2 to 50.

5. A method according to any of Claims 1 to 4, **characterized in that** the fiber material in step a) is oat fraction and that the content of its soluble grain-based dietary fiber is preferably at least 10 % by weight, more preferably at least 12 % by weight and most preferably at least 15 % by weight of the dry matter.

6. A method according to any of Claims 1 to 5, **characterized in that** the fiber material in step a) is oat fraction with a starch content of 40 % by weight at the most, preferably 35 % by weight at the most, more preferably 30 % by weight at the most, and most preferably 25 % by weight at the most of the dry matter.

7. An edible fiber composition in liquid form obtainable by the process of claim 1, containing grain-based dietary fiber and an aqueous medium, the dietary fiber containing a component that does not dissolve in the medium and a component that dissolves in the medium, whereby the insoluble component forms a dispersion with the medium, **characterized in that** the composition is liquid at a temperature of 4 °C and that the total content of the grain-based dietary fiber of the composition is at least 1.6 % by weight and the content of the soluble grain-based dietary fiber is at least 0.8 % by weight, and that the composition contains starch, the amount of starch being 3 % by weight at the most.

8. A fiber composition according to Claim 7, **characterized in that** the composition contains 2.5 % by weight at the most, more preferably 2 % by weight at the most, most preferably 1.5 % by weight at the most of starch.

9. A fiber composition according to Claim 7 or 8, **characterized in that** the composition contains 1.6 to 4.0 % by weight, preferably 1.6 to 3.0 % by weight, more preferably 1.7 to 3.0 % by weight, and most preferably 1.8 to 3.0 % by weight of grain-based dietary fiber.

10. A fiber composition according to any of Claims 7 to 9, **characterized in that** the composition contains at least 0.9 % by weight, preferably at least 1.0 % by weight, more preferably at least 1.1 % by weight, most preferably at least 1.2 % by weight of soluble grain-based dietary fiber.

11. A fiber composition according to any of Claims 7 to 10, **characterized in that** the soluble grain-based dietary fiber is β-glucan and/or arabinoxylane, preferably β-glucan.

12. A fiber composition according to Claim 11, **characterized in that** the composition contains the grain-based dietary fiber in an amount of at least 1.7 % by weight, preferably 1.7 - 3.0 % by weight, β-glucan in an amount of at least 1 % by weight and starch in an amount of 2 % by weight at the most.

13. A fiber composition according to any of Claims 7 to 12, **characterized in** further containing one or more components selected from the group of sugars, berry juices, fruit juices, vegetable juices, root juices and/or other ingredients to change the taste, acidity and/or colour of the composition.

14. A fiber composition according to any of Claims 7 to 13, **characterized in** containing one or more additional components to change its nutritional composition.

15. A fiber composition according to Claim 14, **characterized in that** the additional component to change the nutritional composition contains fatty acids and/or their esters, vegetable sterols and/or their esters or probiotic micro organisms.

16. A fiber composition according to any of Claims 7 to 15, **characterized in that** the aqueous medium is water, juice, milk product, sour milk product, grain-based drink, alcoholic drink, soy drink or a mixture of two or more of these.

17. The use of the fiber composition according to any of Claims 7 to 16 in the preparation of a foodstuff.

18. The use according to Claim 17, wherein the fiber composition is dried, preferably freeze-dried.

19. A foodstuff, **characterized in** containing the fiber composition according to any of Claims 7 to 16.

20. A product that is used as a foodstuff or the raw material of a foodstuff, **characterized in** containing, in a dried form, the fiber composition according to any of Claims 7 to 16.

## Patentansprüche

1. Verfahren zur Herstellung einer flüssigen Faserzusammensetzung, die Ballaststoff auf Getreidebasis und ein wässriges Medium enthält, wobei der Ballaststoff eine Komponente enthält, die in dem Medium unlöslich und eine Komponente, die in dem Medium löslich ist, wobei die in dem Medium nicht lösliche Komponente eine Dispersion mit dem Medium bildet, **dadurch gekennzeichnet, dass** das Verfahren die folgenden Schritte umfasst:
a) Auswählen eines Fasermaterials, wobei dessen Gehalt an löslichem Ballaststoff auf Getreidebasis mindestens 8 Gewichts-% der Trockenmasse beträgt,
b) Mischen des Fasermaterials mit dem wässrigen Medium unter Bildung eines Gemisches, wobei der Gehalt an Fasermaterial mehr als 1 Gewichts-% beträgt und
c) Durchführen eines Homogenisierungsverfahrens, um eine flüssige Faserzusammensetzung bereitzustellen, wobei deren Gesamtgehalt an Ballaststoff auf Getreidebasis mindestens 1,6 Gewichts-% beträgt und der Gehalt des Ballaststoffs auf Getreidebasis, der in dem Medium löslich ist wenigstens 0,8 Gewichts-% beträgt, wobei die Zusammensetzung eine flüssige Dispersion bei einer Temperatur von 4 °C ist,
wobei das Homogenisierungsverfahren von Schritt c) Folgendes umfasst
i) eine einzelne Homogenisierung bei einem Druck von mindestens 260 bar, vorzugsweise mindestens 300 bar, besonders bevorzugt von 300 bis 800 bar und insbesondere von 300 bis 600 bar,
ii) mindestens zwei aufeinanderfolgende Homogenisierungen, vorzugsweise 2 bis 30 Homogenisierungen, besonders bevorzugt 2 bis 10 Homogenisierungen und insbesondere 3 bis 10 Homogenisierungen bei einem Druck von mindestens 150 bar, vorzugsweise mindestens 200 bar, besonders bevorzugt mindestens 250 bar und insbesondere mindestens 300 bar,
iii) kontinuierliches Wiederaufbereiten durch einen Homogenisator über einen Zwischentank, der gemischt werden soll, so dass das Volumen des Gemischs, das den Homogenisator durchläuft, das 2- bis 30-fache, vorzugsweise 3- bis 30-fache in Bezug auf das Volumen des eingespeisten Gemischs ist, wobei der Homogenisierungsdruck mindestens 150 bar, vorzugsweise mindestens 200 bar, besonders bevorzugt mindestens 250 bar, und insbesondere mindestens 300 bar beträgt, oder
iv) die Zugabe eines Fasermaterials, wobei der Gehalt des löslichen Ballaststoffs auf Getreidebasis mindestens 8 Gewichts-% der Trockenmasse beträgt, in einer oder mehreren Chargen zu einem Gemisch, das durch eine oder mehrere Homogenisierungen gegangen ist und durch eine nachfolgende Homogenisierung fortgesetzt wird, wobei der Homogenisierungsdruck mindestens 150 bar, vorzugsweise mindestens 200 bar, besonders bevorzugt mindestens 250 bar beträgt.

2. Verfahren nach Anspruch 1, **dadurch gekennzeichnet, dass** in dem Homogenisierungsverfahren von Schritt c) die Viskosität des Gemischs in einem Scherratenbereich von 20 bis 100 s⁻¹ um mindestens 40% reduziert wird, vorzugsweise um mindestens 50%, besonders bevorzugt um mindestens 60% und insbesondere um mindestens 70% der Viskosität einer entsprechenden nicht-homogenisierten, vollständig hydratisierten Dispersion.

3. Verfahren nach Anspruch 1 oder 2, **dadurch gekennzeichnet, dass** die in Schritt c) bereitgestellte Dispersion auf eine Temperatur von mindestens 70 °C erwärmt wird, wonach sie auf eine Temperatur von 4-30 °C gekühlt wird.

4. Verfahren nach Anspruch 1, **dadurch gekennzeichnet, dass** in Schritt c) iv) die Anzahl der Chargen 1 bis 30 und die Anzahl der Homogenisierungen 2-50 beträgt.

5. Verfahren nach einem der Ansprüche 1 bis 4, **dadurch gekennzeichnet, dass** das Fasermaterial in Schritt a) eine Haferfraktion ist und dass dessen Gehalt an löslichem Ballaststoff auf Getreidebasis vorzugsweise mindestens 10 Gewichts-%, besonders bevorzugt mindestens 12 Gewichts-% und insbesondere mindestens 15 Gewichts-% der Trockenmasse beträgt.

6. Verfahren nach einem der Ansprüche 1 bis 5, **dadurch gekennzeichnet, dass** das Fasermaterial in Schritt a) eine Haferfraktion ist mit einem Stärkegehalt von höchstens 40 Gewichts-%, vorzugsweise höchstens 35 Gewichts-%, besonders bevorzugt höchstens 30 Gewichts-% und insbesondere höchstens 25 Gew-% der Trockensubstanz.

7. Genießbare Faserzusammensetzung in flüssiger Form, erhältlich durch das Verfahren nach Anspruch 1, die Ballaststoff auf Getreidebasis und ein wässriges Medium enthält, wobei der Ballaststoff eine Komponente enthält, die sich in dem Medium nicht löst und eine Komponente, die sich in dem Medium löst, wobei die unlösliche Komponente eine Dispersion mit dem Medium bildet, **dadurch gekennzeichnet, dass** die Zusammensetzung bei einer Temperatur von 4 °C flüssig ist und dass der Gesamtgehalt des Ballaststoffs auf Getreidebasis der Zusammensetzung mindestens 1,6 Gewichts-% beträgt und der Gehalt des löslichen Ballaststoffs auf Getreidebasis mindestens 0,8 Gewichts-% beträgt und dass die Zusammensetzung Stärke enthält, wobei die Stärkemenge höchstens 3 Gewichts-% beträgt.

8. Faserzusammensetzung nach Anspruch 7, **dadurch gekennzeichnet, dass** die Zusammensetzung höchstens 2,5 Gewichts-%, besonders bevorzugt höchstens 2 Gewichts-%, insbesondere höchstens 1,5 Gewichts-% Stärke enthält.

9. Faserzusammensetzung nach Anspruch 7 oder 8, **dadurch gekennzeichnet, dass** die Zusammensetzung 1,6 bis 4,0 Gewichts-%, vorzugsweise 1,6 bis 3,0 Gewichts-%, besonders bevorzugt 1,7 bis 3,0 Gewichts-%, und insbesondere 1,8 bis 3,0 Gewichts-% Ballaststoff auf Getreidebasis enthält.

10. Faserzusammensetzung nach einem der Ansprüche 7 bis 9, **dadurch gekennzeichnet, dass** die Zusammensetzung mindestens 0,9 Gewichts-%, vorzugsweise mindestens 1,0 Gewichts-%, besonders bevorzugt mindestens 1,1 Gewichts-%, insbesondere mindestens 1,2 Gewichts-% löslichen Ballaststoff auf Getreidebasis enthält.

11. Faserzusammensetzung nach einem der Ansprüche 7 bis 10, **dadurch gekennzeichnet, dass** der lösliche Ballaststoff auf Getreidebasis ß-Glucan und/oder Arabinoxylan, vorzugsweise ß-Glucan sind.

12. Faserzusammensetzung nach Anspruch 11, **dadurch gekennzeichnet, dass** die Zusammensetzung den Ballaststoffe auf Getreidebasis in einer Menge von mindestens 1,7 Gewichts-%, vorzugsweise 1,7-3,0 Gewichts-%, ß-Glucan in einer Menge von mindestens 1 Gewichts-% und Stärke in einer Menge von 2 Gewichts-% enthält.

13. Faserzusammensetzung nach einem der Ansprüche 7 bis 12, **dadurch gekennzeichnet, dass** sie ferner eine oder mehrere Komponenten ausgewählt aus der Gruppe von Zuckern, Beerensäften, Fruchtsäften, Gemüsesäften, Wurzelsäften und/oder anderen Inhaltsstoffen enthält, um den Geschmack, die Säure und/oder Farbe der Zusammensetzung zu ändern.

14. Faserzusammensetzung nach einem der Ansprüche 7 bis 13, **dadurch gekennzeichnet, dass** sie eine oder mehrere weitere Komponenten enthält, um ihre Nährzusammensetzung zu ändern.

15. Faserzusammensetzung nach Anspruch 14, **dadurch gekennzeichnet, dass** die zusätzliche Komponente, um die Nährzusammensetzung zu ändern, Fettsäuren und/oder deren Ester, pflanzliche Sterole und/oder deren Ester oder probiotische Mikroorganismen enthält.

16. Faserzusammensetzung nach einem der Ansprüche 7 bis 15, **dadurch gekennzeichnet, dass** das wässrige Medium Wasser, Saft, ein Milchprodukt, ein Sauermilchprodukt, ein Getränk auf Getreidebasis, ein alkoholisches Getränk, ein Sojagetränk oder ein Gemisch aus zwei oder mehreren davon ist.

17. Verwendung der Faserzusammensetzung nach einem der Ansprüche 7 bis 16 zur Herstellung eines Nahrungsmittels.

18. Verwendung nach Anspruch 17, wobei die Faserzusammensetzung getrocknet, vorzugsweise gefriergetrocknet wird.

19. Nahrungsmittel, **dadurch gekennzeichnet, dass** es die Faserzusammensetzung nach einem der Ansprüche 7 bis 16 enthält.

20. Produkt, das als Nahrungsmittel oder Rohstoff eines Nahrungsmittels verwendet wird, **dadurch gekennzeichnet, dass** es, in getrockneter Form, die Faserzusammensetzung nach einem der Ansprüche 7 bis 16 enthält.

## Revendications

1. Procédé de préparation d'une composition de fibre liquide contenant une fibre alimentaire à base de céréales et un milieu aqueux, la fibre alimentaire contenant un composant non soluble dans le milieu et un composant soluble dans le milieu, selon lequel le composant non soluble dans le milieu forme une dispersion avec le milieu, **caractérisé en ce que** le procédé comprend les étapes suivantes :
a) un matériau en fibres est choisi, la teneur en sa fibre alimentaire à base de céréales étant au moins de 8% en poids de la matière sèche,
b) le matériau en fibres est mélangé avec le milieu aqueux pour former un mélange, **caractérisé en ce que** la teneur en matériau en fibres est supérieure à 1% en poids, et
c) un procédé d'homogénéisation est effectué pour fournir une composition de fibre liquide, la teneur totale en sa fibre alimentaire à base de céréales étant au moins de 1,6% en poids, et la teneur en la fibre alimentaire à base de céréales qui est soluble dans le milieu est au moins de 0,8% en poids, la composition étant une dispersion liquide à une température de 4°C,
dans lequel le processus d'homogénéisation de l'étape c) comprend
i) une homogénéisation unique à une pression d'au moins 260 bar, de préférence d'au moins 300 bar, plus préférablement de 300 à 800 bar, et encore plus préférablement de 300 à 600 bar,
ii) au moins deux homogénéisations successives, de préférence de 2 à 30 homogénéisations, plus préférablement de 2 à 10 homogénéisations, et encore plus préférablement de 3 à 10 homogénéisations à une pression d'au moins 150 bar, de préférence d'au moins 200 bar, plus préférablement d'au moins 250 bar, et encore plus préférablement d'au moins 300 bar,
iii) un recyclage continu à travers un homogénéisateur via un réservoir intermédiaire, qui doit être mélangé, de sorte que le volume du mélange passant à travers l'homogénéisateur est compris dans une gamme allant de 2 à 30 fois, de préférence de 3 à 30 fois, le volume du mélange alimenté, la pression d'homogénéisation étant d'au moins 150 bar, de préférence d'au moins 200 bar, plus préférablement d'au moins 250 bar, et encore plus préférablement d'au moins 300 bar, ou
iv) l'addition d'un matériau de fibre, la teneur en sa fibre alimentaire à base de céréales soluble étant au moins de 8% en poids de la matière sèche, dans un ou plusieurs lots à un mélange qui a subi une ou plusieurs homogénéisations, et il se poursuit par une homogénéisation ultérieure, la pression d'homogénéisation étant d'au moins 150 bar, de préférence d'au moins 200 bar, plus préférablement d'au moins 250 bar.

2. Procédé selon la revendication 1, **caractérisé en ce que** dans le processus d'homogénéisation de l'étape c), la viscosité du mélange à une plage de vitesse de cisaillement comprise entre 20 et 100 s-1 est réduite d'au moins 40%, de préférence d'au moins 50%, plus préférablement d'au moins 60%, et encore plus préférablement d'au moins 70% de la viscosité d'une dispersion correspondante entièrement hydratée, non homogénéisée.

3. Procédé selon la revendication 1 ou la revendication 2, **caractérisé en ce que** la dispersion fournie lors de l'étape c) est chauffée à une température d'au moins 70°C, après quoi elle est refroidie à une température comprise entre 4 et 30°C.

4. Procédé selon la revendication 1, **caractérisé en ce que** dans l'étape c) iv) le nombre de lots est compris entre 1 et 30 et le nombre d'homogénéisations est compris entre 2 et 50.

5. Procédé selon l'une quelconque des revendications 1 à 4, **caractérisé en ce que** le matériau de fibre dans l'étape a) est une fraction d'avoine et que la teneur en sa fibre alimentaire à base de céréales est de préférence au moins de 10% en poids, plus préférablement au moins de 12% en poids et encore plus préférablement au moins de 15% en poids de matière sèche.

6. Procédé selon l'une quelconque des revendications 1 à 5, **caractérisé en ce que** le matériau de fibre dans l'étape a) est une fraction d'avoine avec une teneur en amidon de 40% en poids au plus, de préférence 35% en poids au plus, plus préférablement 30% en poids au plus, et encore plus préférablement 25% en poids de matière sèche.

7. Composition de fibre comestible dans une forme liquide réalisable par le processus selon la revendication 1, contenant une fibre alimentaire à base de céréales et un milieu aqueux, la fibre alimentaire contenant un composant qui ne se dissout pas dans le milieu et un composant qui se dissout dans le milieu, selon laquelle le composant insoluble forme une dispersion avec le milieu, **caractérisé en ce que** la composition est liquide a une température de 4°C et la teneur totale de la fibre alimentaire à base de céréales de la composition est au moins de 1,6% en poids et la teneur de la fibre alimentaire à base de céréales est au moins de 0,8% en poids, et que la composition contient de l'amidon, la teneur en amidon étant de 3% en poids au plus.

8. Composition de fibre selon la revendication 7, **caractérisée en ce que** la composition contient 2,5% en poids au plus, plus préférablement 2% en poids au plus, encore plus préférablement 1,5% en poids d'amidon.

9. Composition de fibre selon la revendication 7 ou la revendication 8, **caractérisée en ce que** la composition contient entre 1,6 et 4,0% en poids, de préférence entre 1,6 et 3,0% en poids au plus, plus préférablement entre 1,7 et 3,0% en poids au plus, et encore plus préférablement entre 1,8 et 3,0% en poids de fibre alimentaire à base de céréales.

10. Composition de fibre selon l'une quelconque des revendications 7 à 9, **caractérisée en ce que** la composition contient au moins 0,9% en poids, de préférence au moins 1,0% en poids au plus, plus préférablement au moins 1,1% en poids au plus, et encore plus préférablement au moins 1,2% en poids de fibre alimentaire soluble à base de céréales.

11. Composition de fibre selon l'une quelconque des revendications 7 à 10, **caractérisée en ce que** la fibre alimentaire soluble à base de céréales est le β-glucane et/ou l'arabinoxylane, de préférence le β-glucane.

12. Composition de fibre selon la revendication 11, **caractérisée en ce que** la composition contient la fibre alimentaire à base de céréales dans une teneur d'au moins 1,7% en poids, de préférence entre 1,7 et 3,0% en poids, du β-glucane dans une teneur d'au moins 1% en poids, et de l'amidon dans une teneur d'au moins 2% en poids.

13. Composition de fibre selon l'une quelconque des revendications 7 à 12, **caractérisée en ce qu'**elle contient en outre un ou plusieurs composant(s) choisi(s) parmi le groupe constitué des sucres, des jus de baies, des jus de fruits, des jus de légumes, des jus de racines et/ou d'autres ingrédients afin de changer le gout, l'acidité et/ou la couleur de la composition.

14. Composition de fibre selon l'une quelconque des revendications 7 à 13, **caractérisée en ce qu'**elle contient un ou plusieurs composants supplémentaires afin de changer sa composition nutritionnelle.

15. Composition de fibre selon la revendication 14, **caractérisée en ce que** le composant supplémentaire pour changer la composition nutritionnelle contient des acides gras et/ou leurs esters, stérols végétaux et/ou leurs esters ou microorganismes probiotiques.

16. Composition de fibre selon l'une quelconque des revendications 7 à 15, **caractérisée en ce que** le milieu aqueux est l'eau, un jus, un produit laitier, un produit au lait acidifié, une boisson a base de céréales, une boisson alcoolique, une boisson à base de soja ou un mélange de deux ou plusieurs de ceux-ci.

17. Utilisation de la composition de fibre selon l'une quelconque des revendications 7 à 16 dans la préparation d'un produit alimentaire.

18. Utilisation selon la revendication 17, dans laquelle la composition de fibre est séchée, de préférence lyophilisée.

19. Produit alimentaire, **caractérisé en ce qu'**il contient la composition de fibre selon l'une quelconque des revendications 7 à 16.

20. Produit qui est utilisé en tant qu'un produit alimentaire ou que la matière première d'un produit alimentaire, **caractérisé en ce qu'**il contient, dans une forme sèche, la composition de fibre selon l'une quelconque des revendications 7 à 16.
